# EUROPÄISCHE PATENTSCHRIFT

(11) **EP 2 788 247 B1**
(45) Veröffentlichungstag und Bekanntmachung des Hinweises auf die Patenterteilung: **23.05.2018**
(21) Anmeldenummer: 12784448.8
(22) Anmeldetag: 24.10.2012
(51) Int. Cl.: B62D 29/00

(54) **KAROSSERIEBAUTEIL**
BODY COMPONENT
ÉLÉMENT DE CARROSSERIE

(30) Priorität: 06.12.2011 DE 102011120180
(43) Veröffentlichungstag der Anmeldung: 15.10.2014
(73) Patentinhaber: Daimler AG, 70327 Stuttgart (DE)
(72) Erfinder: EIPPER, Konrad, 72108 Rottenburg (DE); FEUSER, Peter, 72669 Unterensingen (DE); KALLFASS, Dietmar, 72119 Ammerbuch (DE); LOBENWEIN, Uwe, 70197 Stuttgart (DE); SCHUSTER, Patrick, 70199 Stuttgart (DE); SCHWEIKER, Thomas, 70736 Fellbach (DE); von STRZEMIE, Kai, 71397 Leutenbach (DE)
(74) Vertreter: JENSEN & SON
(86) Internationale Anmeldenummer: PCT/EP2012/004437
(87) Internationale Veröffentlichungsnummer: WO 2013/083218

(56) Entgegenhaltungen:
- DE-A1-102005 003 978
- DE-A1-102007 026 762
- DE-A1-102011 014 454
- US-A- 5 212 208
- US-A1- 2010 109 385

## Beschreibung

Die Erfindung betrifft ein Karosseriebauteil, insbesondere eine Säule für einen Kraftwagen nach dem Oberbegriff von Patentanspruch 1.

Karosseriebauteile in sogenannter Schalenbauweise finden im Kraftwagenbau vielfältig Anwendung, insbesondere für Säulen und Trägerteile, sowie für Türen, Klappen oder dergleichen. Aus der DE 10 2004 012 399 A1 ist und DE102011014454 sind eine solche Fahrzeugsäule in Schalenbauweise bekannt. Die Säule umfasst dabei eine Außenschale und eine Innenschale, die über jeweilige Flansche miteinander verbunden sind und einen Hohlraum zwischen sich einschließen. Um der Karosserie die notwendige Stabilität sowohl unter normalen Betriebsbelastungen als auch im Crashfall zu verleihen, ist in diesem Hohlraum ein zusätzliches Verstärkungsblech angeordnet. Nachteiligerweise sind solche mehrteiligen Blechkonstruktionen jedoch besonders schwer, sodass mit dem Gesamtgewicht des Kraftwagens auch dessen Kraftstoffverbrauch und damit Schadstoffausstoß ansteigt.

Die DE 10 2007 010 341 A1 beschreibt ein Bauteil in Schalenbauweise, bei welchem das Verstärkungselement zwischen Außen- und Innenschale aus einem Faserverbundkunststoff gefertigt ist, um so Gewicht einzusparen. Das Verstärkungselement ist dabei mit den Schalen verklebt. Hierdurch kann Gewicht eingespart werden, das Verkleben verlängert jedoch die Prozesszeit aufgrund der Aushärtungserfordernisse. Durch das Verkleben wird das Strukturelement zudem unlösbar mit den Schalen verbunden.

Der vorliegenden Erfindung liegt somit die Aufgabe zu Grunde, ein Karosseriebauteil nach dem Oberbegriff von Patentanspruch 1 bereitzustellen, welches besonders leicht, einfach und schnell zu fertigen sowie einfach zu reparieren ist.

Diese Aufgabe wird durch ein Karosseriebauteil mit den Merkmalen des Patentanspruchs 1 gelöst.

Ein solches Karosseriebauteil, insbesondere eine Säule, für einen Kraftwagen umfasst eine Innenschale und eine Außenschale aus einem Metall, welche in jeweiligen Flanschbereichen miteinander verbunden sind und welche einen Hohlraum zwischen sich einschließen. In diesem ist ein Verstärkungselement mit einem Grundkörper aus einem Faserverbundkunststoff zum Versteifen des Karosseriebauteils angeordnet. Erfindungsgemäß ist dabei vorgesehen, dass das Verstärkungselement zumindest ein metallisches Einlegeteil umfasst, mittels welchem das Verstärkungselement mit der Innen- und/oder Außenschale verbunden ist. Mit anderen Worten ist die Fügestelle des Verstärkungselements mit den Schalen des Karosseriebauteils eine Metall-Metall-Verbindung. Hierdurch kann auf eine Verklebung verzichtet werden und gleichzeitig eine stabilere reversible Verbindung, beispielsweise durch Schrauben oder dergleichen ermöglicht werden. Ein solches Karosseriebauteil ist daher sowohl besonders leicht, als auch besonders prozesssicher und schnell zu fügen und einfach zu reparieren.

In einer bevorzugten Ausführungsform der Erfindung umfasst das Verstärkungselement zwei metallische Einlegeteile, welche in den Flanschbereichen mit der Innen- und/oder Außenschale verbunden sind. Mit anderen Worten erstreckt sich ein derartiges Verstärkungselement quer durch den gesamten Hohlraum und verbindet die beiden Flansche zwischen den Schalen miteinander, wobei auf beiden Verbindungsseiten jeweils Metall-Metall-Verbindungen vorgesehen sind. Hierdurch wird eine besonders gute Stabilisierung erreicht, wobei die oben genannten Vorteile erhalten bleiben.

Vorzugsweise sind die Einlegeteile als Bleche ausgebildet. Hierbei kann es sich um einfache Blechstreifen oder auch um umgeformte Blechkonstruktionen handeln. In beiden Fällen ist die Herstellung der Einlegeteile sowie deren Verbindung mit den Faserverbundkunststoff besonders einfach und kostengünstig durchzuführen. Gemäss der Erfindung ist das Umspritzen der Einlegeteile mit dem Faserverbundkunststoff, wobei zweckmäßiger Weise in den Einlegeteilen zumindest eine Durchgangsöffnung oder ein ähnliches Formschlusselement vorgesehen ist, um eine stabile und zuverlässige Verkrallung zwischen der Kunststoffmatrix und dem Einlegeteil sicherzustellen. Neben dem einfachen Umspritzen sind selbstverständlich auch andere Methoden denkbar. Beispielsweise können die Einlegeteile auch im Rahmen des resin transfer molding oder beim Herstellen des Faserverbundbauteils im Rahmen eines sheet molding compond-Prozesses in das Verstärkungselement eingebettet werden.

Zweckmäßiger Weise weist das Verstärkungselement weitere Verstärkungsfasern aus einem Metall auf. Diese erstrecken sich zweckmäßiger Weise durch den gesamten Körper des Verstärkungselements, um diesem eine besonders hohe Festigkeit zu geben.

Gleichzeitig ermöglicht das vorsehen derartiger metallischer Verstärkungsfasern eine nachträgliche Verbindung der Einlegeteile mit dem Verstärkungselement, beispielsweise durch Verschweißen oder Verlöten, sodass die Einlegeteile nicht fest in die Kunststoffmatrix eingebettet werden müssen. Auch die Verstärkungsfasern können auf einfache Weise mit dem faserverstärktem Kunststoff umspritzt oder aber im Rahmen des resin transfer molding oder der Herstellung eines sheet molding compond mit der Kunststoffmatrix verbunden werden.

In weiterer Ausgestaltung der Erfindung weist das Verstärkungselement ein wesentliches S-förmiges Querschnittsprofil auf. Hierdurch kann es sich mit seinem Kunststoffbereich an den Schaleninnenwänden abstützen und sorgt so für eine besonders gute Versteifung, wobei die weiche Abstützung gleichzeitig ein eventuelles Klappern bei Bewegungen des Verstärkungselements verhindert.

Im Folgenden wird die Erfindung und ihre Ausführungsformen anhand der Zeichnung näher erläutert. Hierbei zeigen:
- Fig. 1: eine Schnittdarstellung durch ein Ausführungsbeispiel eines erfindungsgemäßen Karosseriebauteils und
- Fig. 2: eine Seitenansicht eines Verstärkungselements für ein Ausführungsbeispiel eines erfindungsgemäßen Karosseriebauteils.

Eine im Ganzen mit der 10 bezeichnete Säule für einen Kraftwagen umfasst eine Außenschale 12 und eine Innenschale 14, die aus Stahl- oder Aluminiumblech gefertigt sind. Die Schalen 12, 14 sind in jeweiligen Flanschbereichen 16 miteinander verbunden und schließen einen Hohlraum 18 zwischen sich ein. Im Hohlraum 18 ist ein Verstärkungselement 20 angeordnet. Dieses umfasst einen Grundkörper 22 aus einem faserverstärktem Kunststoff, in welchen gewinkelte Blechstreifen 24 eingelegt sind. Die Blechstreifen 24 erstrecken sich mit ihren Endbereichen 26 in die Flanschbereiche 16 und sind dort mit Innenschale 12 und Außenschale 14 verbunden.

Neben Verstärkungsfasern aus Kunststoff umfasst der Grundkörper 22 noch zusätzliche metallische Verstärkungsfasern 28. Der Grundkörper 22 des Verstärkungsteils 20 ist S-förmig ausgebildet und umfasst ein Mittelteil 30 sowie seitliche Schenkel 32, 34. Die Schenkel 32, 34 liegen dabei an den Innenwandungen 36, 38 der Außenschale 12 und Innenschale 14 an, sodass eine besonders gute Stützwirkung erzielt und Klappern vermieden wird.

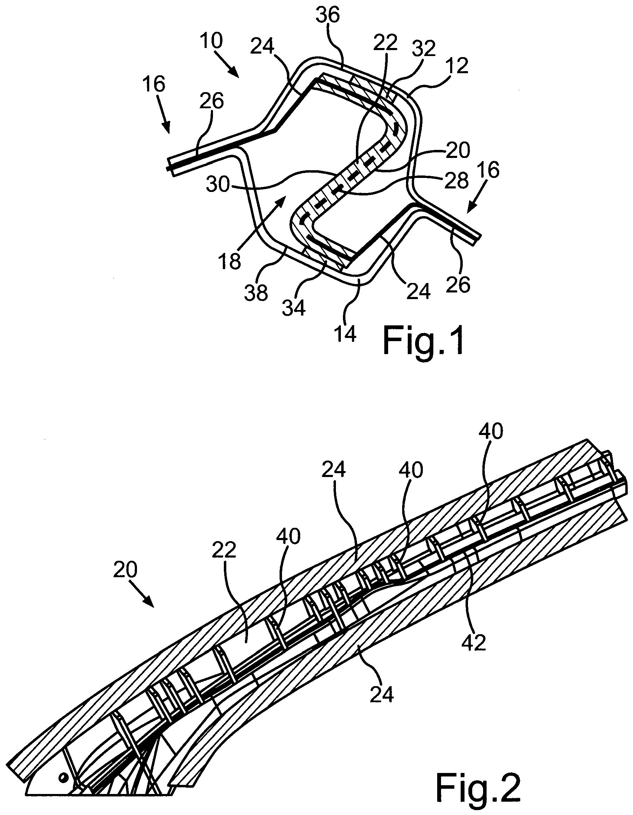

Wie in der Seitenansicht des Verstärkungsteils 20 in Fig. 2 deutlich wird, erstrecken sich die Metallstreifen 24 über die gesamte Länge des Verstärkungsteils 20 und sind daher auch über dessen gesamte Länge mit den Flanschen 16 verbunden. Der Grundkörper 22 aus dem faserverstärktem Kunststoff weist eine Struktur aus Versteifungsrippen 40 auf, die der Übersicht halber nicht alle bezeichnet sind. Über die gesamte Länge des Grundkörpers 22 erstreckt sich ferner ein Wulst 42, der ebenfalls der weiteren Versteifung dient.

Aufgrund der die Blechstrukturen 24 ermöglichen bei der Herstellung der Säule 10 ein konventionelles Fügen von Außenschale 12, Innenschale 14 und Versteifungsteil 20, die beispielsweise durch Schweißen, Löten, Nieten oder Klinschen erfolgen kann. Auch lösbare Verbindungstechniken, wie beispielsweise das Schrauben können Anwendung finden. Die metallische Verstärkung 28 kann ebenfalls separat mit den Blechen 24 gefügt werden, beispielsweise durch Schweißen oder Löten. Als metallische Verstärkung 28 können insbesondere metallische Drähte, Netze, Gestricke, Gewebe, Seile, Bänder, Rovings oder Streifen Anwendung finden.

Zum Herstellen des Verstärkungselements 20 können an sich bekannte Verfahren der Faserverbundtechnik Anwendung finden. Die Verstärkungsfasern und metallische Verstärkungselemente 28 können beispielsweise einfach mit Kunststoff oder einer Hybridmasse aus kurzfaserverstärktem Kunststoff umspritzt werden. Auch sheet molding compond (SMC) oder resin transfer molding (RTM) Verfahren können Anwendung finden. Hierbei können die Blechstreifen 24 gleich direkt in die Kunststoffmatrix integriert werden, sodass diese im gleichen Arbeitsgang und im gleichen Werkzeug umspritzt werden können wie die Fasereinleger. Hierzu kann die Faserverstärkung 28 bereits vor dem Umspritzen mit dem Blechstreifen 24 fest verbunden werden. In dem Blechstreifen 24 können ferner noch Löcher, Hinterschnitte oder dergleichen vorgesehen sein, die für eine feste Verkrallung zwischen dem Blechstreifen 24 und der Kunststoffmatrix des Grundkörpers 22 sorgen. Die Blechstreifen 24 können selbstverständlich auch im SMC oder RTM-Prozess als Prepregs bzw. Preforms gemeinsam mit dem Fasereinleger 28 integriert werden. Bei der Prepregs Ausbildung kann dabei gegebenenfalls die feste Verbindung von Fasereinleger 28 und Blechstreifen 24 erforderlich sein, während dies bei der Bildung einer Preform nicht notwendig ist, da dort bei der Konsolidierung die geschmolzene und erstarrende Matrixmasse die die Blechstreifen fest miteinschließt.

Insgesamt wird so eine Säule 10 geschaffen, die mit besonders wenig Einzelbauteilen auskommt bei einer Faserverbundhybridverstärkung besonders einfach, stabil und kostengünstig in Stahl/Aluminium-Rohbauten integriert und die Anwendung konventioneller Fügetechnik ermöglicht. Gegenüber konventionellen Verstärkungen aus Stahl oder Aluminium kann durch das Verstärkungselement 20 ein besonders hohes E-Modue erreicht werden, was wiederum zu einer verbesserten Materialausnutzung und einer besonders hohen Gewichtsreduzierung und einen damit verbundenen geringen CO2 Ausstoß des Kraftwagens mit einer Säule 10 führt.

## Patentansprüche

1. K Karosseriebauteil (10), insbesondere Säule, für einen Kraftwagen, mit einer Innenschale (14) und einer Außenschale (12) aus einem Metall, welche in jeweiligen Flanschbereichen (16) miteinander verbunden sind und welche einen Hohlraum (18) zwischen sich einschließen, in welchem ein Verstärkungselement (20) mit einem Grundkörper (22) aus einem Faserverbundkunststoff zum Versteifen des Karosseriebauteils (10) eingeordnet ist, wobei
das Verstärkungselement (20) zumindest ein metallisches Einlegeteil (24) umfasst, mittels welchem das Verstärkungselement (20) mit der Innen- (14) und/oder Außenschale (12) in den Flanschbereichen (16) verbunden ist.
und wobei
die Einlegeteile (24) mit dem Faserverbundkunststoff des Verstärkungselements (20) umspritzt sind
**dadurch gekennzeichnet, dass**
die Einlegeteile (24) zumindest eine Durchgangsöffnung oder dgl. Formschlusselement aufweisen.

## Claims

1. B Body component (10), in particular post, for a motor vehicle, comprising an inner shell (14) and an outer shell (12) made of a metal, which are joined to each other in respective flange regions (16) and which enclose a cavity (18) in between, in which a reinforcing element (20) with a base body (22) of a fibrous composite material in incorporated to reinforce the body component (10),
wherein
the reinforcing element (20) comprises at least one metallic insert part (24), by means of which the reinforcing element (20) is joined to the inner (14) and/or the outer shell (12) in the flange regions (16),
and wherein
the insert parts (24) are coated with the fibrous composite material of the reinforcing element (20),
**characterised in that**
the insert parts (24) have at least one through-opening or positive locking element of a similar type.

## Revendications

1. Elément structural (1) de carrosserie, en particulier colonne, pour un véhicule automobile, comprenant une coque intérieure (14) et une coque extérieure (12) en métal, qui sont reliées l'une à l'autre dans des zones de bride respectives (16) et qui renferment entre elles un espace creux (18) dans lequel est placé un élément de renfort (20) doté d'un corps de base (22) constitué d'un matériau composite renforcé de fibres servant à rigidifier l'élément structural (1) de carrosserie, l'élément de renfort (20) comprenant au moins un élément inséré métallique (24) au moyen duquel l'élément de renfort (20) est relié à la coque intérieure (14) et/ou extérieure (12) dans les zones de bride, et les éléments insérés (24) étant surmoulés avec le matériau composite renforcé de fibres de l'élément de renfort (20), **caractérisé en ce que** les éléments insérés (24) présentent au moins une ouverture de passage ou un élément de verrouillage par engagement similaire.
